# EUROPÄISCHE PATENTSCHRIFT

(11) **EP 1 189 966 B1**
(45) Veröffentlichungstag und Bekanntmachung des Hinweises auf die Patenterteilung: **24.08.2005**
(21) Anmeldenummer: 00938730.9
(22) Anmeldetag: 02.06.2000
(51) Int. Cl.: C08G 59/66, C08G 59/68

(54) **EPOXIDHARZHÄRTER-ZUSAMMENSETZUNGEN**
EPOXY RESIN HARDENER COMPOSITIONS
COMPOSITIONS DURCISSANTES POUR RESINE EPOXYDE

(30) Priorität: 11.06.1999 DE 19926629
(43) Veröffentlichungstag der Anmeldung: 27.03.2002
(73) Patentinhaber: Cognis Deutschland GmbH & Co. KG, 40789 Monheim (DE)
(72) Erfinder: HÖFER, Rainer, 40477 Düsseldorf (DE); NAGORNY, Ulrich, 40721 Hilden (DE)
(86) Internationale Anmeldenummer: PCT/EP2000/005045
(87) Internationale Veröffentlichungsnummer: WO 2000/077067

(56) Entgegenhaltungen:
- EP-A- 0 370 446
- US-A- 3 208 955
- US-A- 5 135 994
- DATABASE WPI Section Ch, Week 199043 Derwent Publications Ltd., London, GB; Class A14, AN 1990-323725 XP002147881 & JP 02 229848 A (NITTO KASEI CO LTD), 12. September 1990 (1990-09-12)
- DATABASE CHEMABS [Online] chemical abstracts service,; retrieved from STN, accession no. 121:111103 XP002147880 & JP 06 100749 A 12. April 1994 (1994-04-12)

## Beschreibung

Die Erfindung betrifft Epoxidharzhärter-Zusammensetzungen enthaltend mindestens einen Mercaptanhärter und mindestens ein Metallsalz von Carbonsäuren mit 8 - 24 C-Atomen gemäß Anspruch 1.

### Stand der Technik

Zu den wichtigsten Lackrohstoffen gehören die Filmbildner, häufig unscharf auch als Bindemittel bezeichnet. Es handelt sich dabei um Polymere oder Prepolymere meist organisch chemischer Natur, wobei die Prepolymeren (Oligomere) durch sogenannte Lackhärtung polymerisiert werden. Filmbildner haben die Funktion, einen zusammenhängenden und auf dem jeweiligen Untergrund haftenden Lack bzw. Farbfilm zu bilden und dabei - sofern vorhanden - die übrigen nichtflüchtigen Lackbestandteile, insbesondere Pigmente und Füllstoffe, zusammenzuhalten bzw. einzubetten. Filmbildner stellen mithin die Basis eines Beschichtungsstoffes dar. Nach ihrer Herkunft teilt man die Filmbildner in Naturstoffe, modifizierte Naturstoffe und synthetische Stoffe ein. Zu den letzteren gehören insbesondere Polyester, Alkydharze, Acrylharze, Kunststoffdispersionen (Emulsionspolymerisate), Formaldehyd-Kondensate, Polyurethane und Epoxid-Systeme.

Naturstoffe spielen heute eine relativ geringe Rolle. Neben Naturharzen wie Kolophonium, Kopal, Dammar und Schellack sind vor allem die oxidativ trocknenden Öle von Bedeutung. Hierbei handelt es sich um fette Öle, d.h. Triglyceride von Fettsäuren, wobei in lacktechnischer Hinsicht die Anzahl der Doppelbindungen in diesen Ölen das wesentlichste Merkmal darstellt. Von herausragender Bedeutung ist das sogenannte "Trocknen" dieser Öle, worunter die oxidative Polymerisation unter Vernetzung zu verstehen ist. Da die Trocknung sehr langsam vor sich geht, beschleunigt man sie durch den Zusatz von sogenannten Sikkativen (Trockenstoffen), bei denen es sich um Seifen handelt, d.h. um z.B. Cobalt-, Mangan-, Zirkon-, Cer-Salze von Carbonsäuren. Die Vernetzung von trocknenden Ölen mittels Sikkativen zu einer sogenannten Firniß ist jedoch etwas völlig anderes als die unten beschriebene Vernetzung von Epoxidharzen.

Epoxidharze sind organisch-chemische Substanzen oder Substanzgemische, die in der Regel zwei oder mehr - zumeist isolierte, im allgemeinen endständige - Epoxidgruppen je Molekül aufweisen und die sich durch Reaktion dieser Epoxidgruppen zu duroplastischen Formstoffen vernetzen lassen. In der deutschsprachigen und angelsächsischen Literatur werden derartige Stoffe als Epoxidharze bzw. epoxy resins bezeichnet.

Den bei weitem wichtigsten Epoxidharztyp stellen heute die aus dem sogenannten "Bisphenol A" [= (2,2-Bis-(4-hydroxyphenyl)propan] und Epichlorhydrin in Gegenwart von Natronlauge zugänglichen Bisphenol-A-Epichlorhydrin-Harze - meist kurz als "Bis-A-Harze" bezeichnet - dar. Auch dem sogenannten Bisphenol-F-Epichlorhydrinharzen kommt eine wichtige Rolle zu.

Handelsübliche Epoxidharze weisen in der Regel eine relativ niedrige Molmasse auf und werden durch Zusatz eines sogenannten Härters auf dem Wege einer chemischen Reaktion in hochmolekulare Stoffe überführt. Der Härter bewirkt mithin eine Vernetzung. Es ist daher vorgeschlagen worden, die Epoxidharze vor der Vernetzung nicht als Harze zu bezeichnen, sondern als Vorkondensate bzw. Vorprodukte, diese Nomenklatur hat sich jedoch nicht durchgesetzt. Verbreitet ist jedoch die Bezeichnung "ungehärtetes Epoxidharz" für das (noch) nicht vernetzte und "ausgehärtetes Epoxidharz" für das vernetzte Harz.

In verarbeitungstechnischer Hinsicht zählt man die Epoxidharze zu den sogenannten Reaktionsharzen, worunter man flüssige oder schmelzbare Harze versteht, die mit sich selbst oder mit Reaktionspartnern (Härtern) durch Polyaddition oder Polymerisation in einen vernetzten Zustand übergehen. Epoxidharze sind demnach Reaktionsharze mit einer zur Härtung ausreichenden Anzahl von Epoxidgruppen. Reaktionsharzmassen sind verarbeitungsfähige Mischungen eines Reaktionsharzes mit den erforderlichen Zusatzstoffen, etwa Härtern, Katalysatoren, Füllstoffen. Reaktionsharzformstoffe sind Stoffe (Werkstoffe) aus gehärteten Reaktionsharzmassen, die als Formteile oder Halbzeuge vorliegen. Es gilt mithin das folgende Schema:

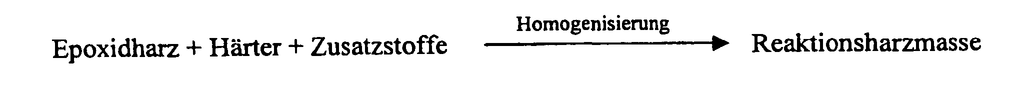

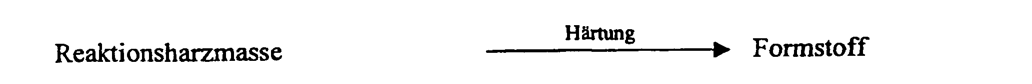

Eine besonders wichtige Klasse von Reaktionsharzforinstoffen sind Beschichtungen und Klebstoffe auf Basis von Epoxidharzen.

Epoxidharze haben eine im Vergleich zu anderen hochmolekularen Polymeren sehr niedrige Molmassen und sind teilweise sogar definierte niedermolekulare Verbindungen. Ihre für die Anwendung .als Plastwerkstoffe wichtigste chemische Reaktion ist deshalb die Vernetzung, die im allgemeinen durch den Zusatz einer zweiten Komponente, des sogenannten Härters, ausgelöst wird. Dabei erfolgt im Prinzip eine Öffnung des Oxiranringes und vielfach unter Einbau des Härters eine Verknüpfung der freien Valenzen mit sonstigen, im Epoxidharz vorhandenen funktionellen Gruppen. Die Vernetzung erfolgt als Polyaddition bzw. Polymerisation ohne die Abspaltung fester, flüssiger oder gasförmiger Stoffe, so daß auch ohne Druckanwendung jegliche Bläschenbildung vermieden wird und nur sehr geringe Schrumpfungen auftreten. Aus dem Stand der Technik sind eine Vielzahl von Substanzen als Härter bekannt. Zu den wichtigsten zählen organische Di- und Polycarbonsäureanhydride, reaktionsfähige Di- und Polyamine bzw. - amide sowie Mercaptane.

Mercaptanhärter sind heutzutage kommerziell erhältliche Produkte. Ihre Vorteile werden beispielsweise in der von der Henkel Corporation publizierten Schrift **"Mercaptans: An Added Dimension for Epoxy Coatings" (Autoren = Stuart J. Hartman, Raymond P. Dallago)** beschrieben, die eine Zusammenfassung eines am 23. Februar 1987 dargebotenen Symposiumsvortrages darstellt. Insbesondere wird in dieser Schrift gezeigt, daß Mercaptanhärter vom Typ "Capcure^{(R)}" zahlreiche Vorteile im Vergleich zu konventionellen Härtern für Epoxidharze bieten.

### Beschreibung der Erfindung

Aufgabe der Erfindung war die Bereitstellung von Härter-Zusammensetzungen für Epoxidharze. Im folgenden wird der Einfachheit halber kurz von Epoxidharzhärter-Zusammensetzungen gesprochen.

Überraschenderweise wurde gefunden, daß Epoxidharzhärter-Zusammensetzungen enthaltend mindestens einen Mercaptanhärter und mindestens ein Metallsalz von Carbonsäuren mit 8 - 24 C-Atomen wobei als Metallsalz Zinkricinoleat enthalten ist bei der vernetzenden Umsetzung mit Epoxidharzen zu Formmassen - insbesondere Beschichtungen - führen, die sich durch ausgezeichnete anwendungstechnische Eigenschaften auszeichnen und die insbesondere einen ausgezeichneten Glanz aufweisen.

Gegenstand der Erfindung sind zunächst Epoxidharzhärter-Zusammensetzungen enthaltend mindestens einen Mercaptanhärter und mindestens ein Metallsalz von Carbonsäuren mit 8 - 24 C-Atomen gemäß Anspruch 1.

Härter für Epoxidharze - auch als sogenannte "epoxy curing agents" bezeichnet - sind dem Fachmann bekannt. Beispielhaft sei in diesem Zusammenhang auf folgende Monographie verwiesen: **Handbook of Coating Additives, Vol. 2; Leonard J. Calbo (editor), New York 1992; Seiten 277-299.** Insbesondere wird dort auf Seite 298 auf Polymercaptane hingewiesen, die im Rahmen der vorliegenden Erfindung zu den "Mercaptanhärtern" gezählt werden. Der Begriff der Mercaptanhärter ist ansonsten dem Fachmann wohlbekannt; so definiert ein jüngeres Lexikon den Begriff wie folgt: "Mercaptanhärter (Polysulfidhärter) = Härtungsmittel unterschiedlicher chemischer Struktur, zum Beispiel SHterminierte Polysulfide, Mercaptoester und Mercaptoether für die Kalthärtung von Epoxidharzen", vergleiche **RÖMPP Lexikon Lacke und Druckfarben, Stuttgart 1998, Seite 375.** Der Begriff der "Mercaptanhärter" umfaßt im Rahmen der vorliegenden Erfindung alle organischen Verbindungen mit ein oder mehreren Mercaptogruppen, die sich zur Härtung von Epoxidharzen eignen.

In einer Ausführungsform der Erfindung enthalten die Zusammensetzung zusätzlich mindestens einen Amidharzhärter und/oder mindestens einen Aminharzhärter. Amidharzhärter und Aminharzhärter sind dem Fachmann bekannt. Lediglich beispielhaft sei hinsichtlich dieser speziellen Härter auf folgende Literatur verwiesen:
- **Zenko. W. Wicks / Frank N. Jones / S. Peter Pappas; "Organic Coatings: Science and Technology, Vol. I", New York 1993, Seiten 162-179.**
- **"Lackharze - Chemie, Eigenschaften und Anwendungen"; Dieter Stoye und Werner Freitag (Hrsg.); München 1996; Seiten 252-263.**
- **H. Kittel; "Lehrbuch der Lacke und Beschichtungen; Band 2"; Stuttgart 1998; Seiten 267-291**

Wie gesagt enthalten die erfindungsgemäßen Zusammensetzungen neben dem Mercaptan-Härter mindestens ein Metallsalz von Carbonsäuren mit 8 - 24 C-Atomen. Insbesondere handelt es sich dabei um Ba-, Cd-, Ca-, Ce-, Cu-, Fe-, La-, Pb-, Mn-, Zn- und Zr-Salze von Carbonsäuren mit 8 - 24 C-Atomen.

Beispiele geeigneter Carbonsäuren sind Caprylsäure, Pelargonsäure, Caprinsäure, Undecansäure, Laurinsäure, Tridecansäure, Myristinsäure, Pentadecansäure, Palmitinsäure, Heptadecansäure, Stearinsäure, Nonadecansäure, Arachinsäure, Heneicosansäure, Behensäure, 10-Undecensäure, Lauroleinsäure, Myristoleinsäure, Palmitoleinsäure, Ölsäure, Petroselinsäure, Elaidinsäure, Ricinolsäure, Linolsäure, Linolaidinsäure, Linolensäure, Eläostearinsäure, Gadoleinsäure, Arachidonsäure, Erucasäure, Brassidinsäure, Clupanodonsäure, ferner Naphthen-, 2-Ethylhexan-, Tallöl-, Neodecan- und Isononansäure. Die Carbonsäuren können einzeln oder als Mischungen vorliegen.

Das Zinkricinoleat (= Zinksalz der 9-cis-Octadecen-12-ol-säure) kann dabei in reiner Form oder in technischer Qualität eingesetzt werden. Ist es von technischer Qualität, so kann es neben dem Zinksalz der 9-cis-Octadecen-12-ol-säure auch Zinksalze anderer Hydroxyfettsäuren sowie anderer gesättigter und/oder ungesättigter Fettsäuren enthalten, ferner Zinksalze von Abietinsäure oder ähnlichen Harzsäuren sowie Derivate von Tocopherolen oder Ascorbinsäure.

Die erfindungsgemäßen Mischungen enthalten die Metallsalze von Carbonsäuren mit 8 - 24 C-Atomen insbesondere in einer Menge, die 0,01 bis 5,0 Gew.-% - bezogen auf die Mercaptanhärter - entspricht. Dabei ist ein Bereich von 0,5 bis 3 Gew.-% besonders bevorzugt.

Die erfindungsgemäßen Epoxidharzhärter-Zusammensetzungen werden zur Herstellung von Formkörpern - insbesondere Beschichtungen - mit Epoxidharzen umgesetzt. Bei diesen Epoxidharzen handelt es sich um Polyepoxide mit im Mittel mindestens zwei Epoxidgruppen pro Molekül. Diese Epoxidverbindungen können dabei sowohl gesättigt als auch ungesättigt sowie aliphatisch, cycloaliphatisch, aromatisch oder heterocyclisch sein und auch Hydroxylgruppen aufweisen. Sie können weiterhin solche Substituenten enthalten, die unter den Mischungs- und Reaktionsbedingungen keine störenden Nebenreaktionen verursachen, beispielsweise Alkyl- oder Arylsubstituenten, Ethergruppierungen und ähnliche. Vorzugsweise handelt es sich bei diesen Epoxidverbindungen um Polyglycidylether auf der Basis von mehrwertigen, vorzugsweise zweiwertigen Alkoholen, Phenolen Hydrierungsprodukten dieser Phenole und/oder von Novolacken (Umsetzungsprodukte von ein- oder mehrwehrtigen Phenolen mit Aldehyden, insbesondere Formaldehyd in Gegenwart saurer Katalysatoren). Die Epoxidäquivalentgewichte dieser Epoxidverbindungen liegen vorzugsweise zwischen 160 und 3000, insbesondere zwischen 170 und 1000. Das Epoxidäquivalentgewicht einer Substanz ist dabei als diejenige Menge der Substanz (in Gramm) definiert, welche 1 mol Oxiranringe enthält.

Als mehrwertige Phenole kommen vorzugsweise folgende Verbindungen in Frage: Resorcin, Hydrochinon, 2,2-Bis-(4-hydroxyphenyl)propan (Bisphenol A), Isomerengemische des Dihydroxydiphenylmethans (Bisphenol F), Tetrabrombisphenol A, 4,4'-dihydroxy-diphenylcyclohexan, 4,4'-dihydroxy-3,3-dimethyldiphenylpropan, 4,4'-Dihydroxydiphenyl, 4,4'-Dihydroxy-benzophenol, Bis-(4-hydroxyphenyl)-1,1-ethan, Bis-(4-hydroxyphenyl)-1,1-isobutan, Bis-(4-hydroxyphenyl)-methan, Bis-(4-hydroxyphenyl)-ether, Bis-(4-hydroxy-phenyl)-sulfon u.a. sowie die Chlorierungs- und Bromierungsprodukte der vorstehend genannten Verbindungen; Bisphenol A ist dabei ganz besonderes bevorzugt.

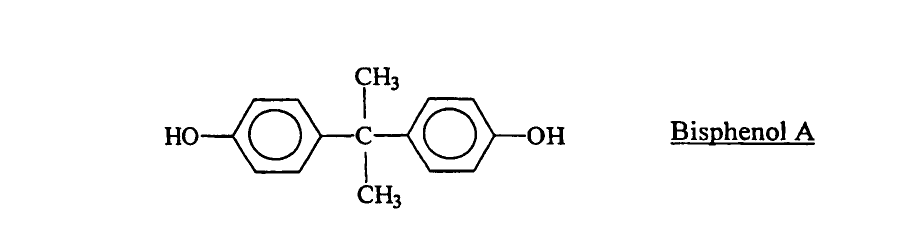

Auch Polyglycidylether von mehrwertigen Alkoholen sind als Epoxidharze geeignet. Als Beispiele derartiger mehrwertiger Alkohole seien Ethylenglykol, Diethylenglykol, Triethylenglykol, 1,2-Propylenglykol, Polyoxypropylenglykole (n = 1 - 20), 1,3-Propylenglykol, 1,4-Butylenglykol, 1,5-Pentandiol, 1,6-Hexandiol, 1,2,6-Hexantriol, Glycerin und Bis-(4-hydroxycyclohexyl)-2,2-propan genannt.

Es können auch Polyglycidylether von Polycarbonsäuren als Epoxidharze verwendet werden, die man durch die Umsetzung von Epichlorhydrin oder ähnlichen Epoxyverbindungen mit einer aliphatischen, cycloaliphatischen oder aromatischen Polycarbonsäure, wie Oxalsäure, Bemsteinsäure, Adipinsäure, Glutarsäure, Phthalsäure, Terephthalsäure, Hexahydrophthalsäure, 2,6-Naphthalindicarbonsäure und dimerisierte Linolensäure, erhält. Beispiele sind Adipinsäurediglycidylester, Phthalsäurediglycidylester und Hexahydrophthalsäurediglycidylester.

Es können auch Mischungen von mehreren Epoxidharzen verwendet werden.

Ein weiterer Gegenstand der Erfindung ist dementsprechend ein **Verfahren** zur Herstellung hochglänzender Epoxidharz-Beschichtungen, wobei man eine Komponente A, die mindestens ein Epoxidharz enthält, mit mindestens einem Mercaptanhärter und mindestens einem Metallsalz von Carbonsäuren mit 8 - 24 C-Atomen in Kontakt bringt, wobei als Metallsalz Zinkricinoleat enthalten ist gewünschtenfalls mit weiteren Zusatzstoffen versieht, die Mischung zu einer Reaktionsharzmasse homogenisiert und diese vemetzend aushärten läßt.

Bezüglich der Komponente A gilt das gerade über Epoxidharze gesagte. Bezüglich der Mercaptanhärter und den Metallsalzen von Carbonsäuren mit 8 - 24 C-Atomen sei ebenfalls auf die obigen Ausführungen verwiesen.

Für das erfindungsgemäße Verfahren ist letztlich entscheidend, daß die Epoxidharze der Komponente A mit Mercaptanhärtern und Carbonsäuren mit 8 - 24 C-Atomen in Kontakt kommen die Zinkricinoleat enthalten. Dies kann auf einfache Weise dadurch geschehen, daß man zunächst eine Komponente B herstellt, die eine Mischung von Mercaptanhärtern und Metallsalzen von Carbonsäuren enthält und diese Komponente B dann mit der Komponente A in Kontakt bringt. Es kann jedoch auch gewünscht sein, Mercaptanhärter und Carbonsäuren mit 8 - 24 C-Atomen nacheinander, also getrennt voneinander, mit Komponente A in Kontakt zu bringen.

In einer Ausführungsform geschieht die Aushärtung der Epoxidharze zusätzlich in Gegenwart von aminischen und/oder amidischen Härtern. Bezüglich dieser speziellen Härter sei auf die obigen Ausführungen bzgl. der Amidharzhärter und Aminharzhärter verwiesen.

Die Temperatur bei dem erfindungsgemäßen Verfahren ist an sich nicht kritisch, vorzugsweise wird jedoch bei der Aushärtung im Temperaturbereich von -10 bis 200 °C und insbesondere von 5 bis 50 °C gearbeitet.

Die Mercaptanhärter und die Carbonsäuresalze werden im Hinblick auf die Epoxidharze der Komponente A in relativ geringen Mengen eingesetzt. Vorzugsweise stellt man die Mischungsverhältnisse in der Reaktionsharzmasse so ein, daß die Summe von Mercaptanhärtern und Metallsalzen von Carbonsäuren mit 8 - 24 C-Atomen 0,5 bis 200 Gew.-% - bezogen auf die Summe der Epoxidharze - beträgt. Dabei ist ein Bereich von 1 bis 25 Gew.-% besonders bevorzugt.

Im Hinblick auf Zusatzstoffe gilt, daß alle dem Fachmann einschlägig bekannten Zusatzstoffe eingesetzt werden können. Dabei ist es unkritisch, ob man die Zusatzstoffe mit den Epoxidharzen und/oder den Mercaptanhärtern und/oder den Carbonsäuresalzen konfektioniert.

Typische Zusatzstoffe sind Lösungsmittel, Pigmente, Füllstoffe sowie ferner sogenannte Additive wie beispielsweise Entschäumer, Entlüfter, Netzmittel, Dispergiermittel, Oberflächenadditive, Mattierungsmittel, Rheologieadditive, Korrosionsinhibitoren, Lichtschutzmittel, Trockenstoffe, Katalysatoren, Biozide.

Ein weiterer Gegenstand der Erfindung ist die Verwendung von Zusammensetzungen enthaltend mindestens einen Mercaptanhärter und mindestens ein Metallsalz von Carbonsäuren mit 8 - 24 C-Atomen gemäß Anspruch 4 als Härter für Epoxidharze. Im Hinblick auf die Mischungen, die mindestens einen Mercaptanhärter und mindestens ein Metallsalz von Carbonsäuren mit 8 - 24 C-Atomen enthalten gelten die obigen Ausführungen.

### Beispiele

### 1. Eingesetzte Substanzen

### Harzkomponenten:

**HK-1 = Chemres E 50 X 75:** handelsübliches Epoxidharz (Henkel SpA / Italien)
**HK-2 = Rilanit Special micro:** gehärtetes Ricinusöl (Henkel KGaA / Deutschland)
**HK-3 = Perenol F 40:** Verlaufmittel auf Polyacrylatbasis (Henkel KGaA / Deutschland)
**HK-4 = Texaphor 963:** Pigmentdispergiermittel (Henkel KGaA / Deutschland)

### Härterkomponenten:

**CK-1 = Versamide 115 X 70:** handelsüblicher Polyamidhärter (Henkel KGaA / Deutschland)
**CK-2 = Capcure WR - 6:** handelsüblicher Mercaptanhärter (Henkel Corporation / USA)
**CK-3 = Capcure 1,5 HV:** handelsüblicher Mercaptanhärter (Henkel Corporation / USA)
**CK-4 = Zinkricinoleat**

### Lösungsmittel:

**Xylol:** Isomerengemisch (handelsübliche Mischung)
**MIBK:** Methylisobutylketon

### Pigment:

**Titandioxid:** handelsübliches TiO₂ vom Rutiltyp (Pigment)

### 2. Beispiele und Vergleichsbeispiele

Die Rezepturen und die Ergebnisse der Vergleichsversuche V-1 und V-2 sowie der erfindungsgemäßen Versuche B-1a, B-1b, B-2a und B-2b sind in Tabelle 1 zusammengestellt. Die Angaben in der Tabelle (außer in der letzten Zeile) bedeuten Gewichtsteile. Die Angaben der Glanzgrade (letzte Zeile der Tabelle 1) sind zu verstehen als 60° Reflektometerwerte gemäß DIN 67530.

### Versuchsbeschreibung:

Die Komponenten HK-1, Titandioxid, HK-2, n-Butanol, HK-3, HK-4 und Xylol wurden bei einer Temperatur von 23 °C homogen zusammengerührt. Die entstandene Mischung wird "Mischung A" genannt.
Ferner wurden die Komponenten CK-1, CK-2, CK-3, MIBK, Xylol und CK-4 bei einer Temperatur von 23 °C homogen zusammengerührt. Die entstandene Mischung wird "Mischung B" genannt.
Die Mischungen A und B wurden vereinigt und zu einer Reaktionsharzmasse homogenisiert. Diese Masse wurde direkt, also ohne weitere Induktionszeit, mittels Luftdruckspritzen in einer Schichtdicke von 60 Mikrometern aufgetragen und man ließ sie bei einer Temperatur von 23 °C über einen Zeitraum von 7 Tagen vernetzend aushärten.
Nach der Aushärtung wurde der Glanz der erhaltenen Beschichtung (vergleiche letzte Zeile der Tabelle) nach DIN 67530 durch Reflektometermessung bei einem Meßwinkel von 60° als dimensionslose Zahl bestimmt.

Aus Tabelle 1 geht klar hervor, daß die Beschichtungsmassen gemäß den erfindungsgemäßen Beispielen sich durch deutlich höhere Glanzgrade auszeichneten als die Beschichtungsmassen gemäß den Vergleichsbeispielen.

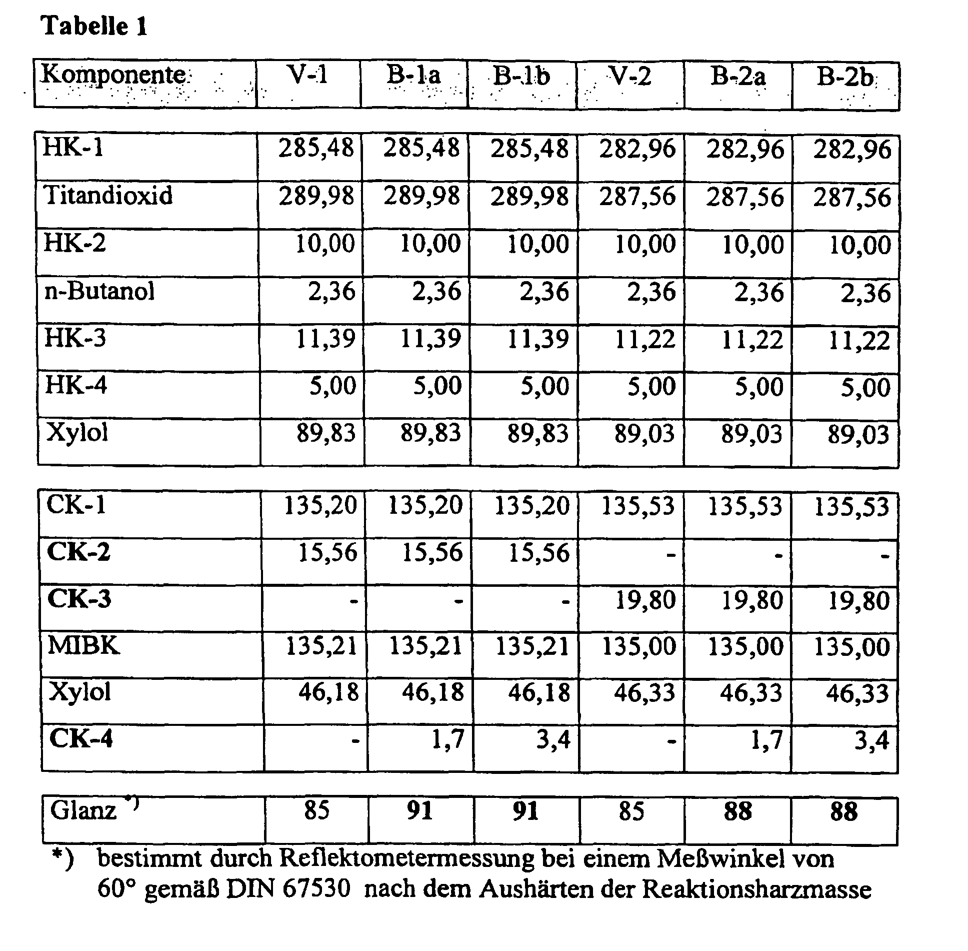

## Patentansprüche

1. Epoxidharzhärter-Zusammensetzung enthaltend mindestens einen Mercaptanhärter und mindestens ein Metallsalz von Carbonsäuren mit 8 - 24 C-Atomen, wobei als Metallsalz einer Carbonsäure Zinkricinoleat enthalten ist.

2. Härter nach Anspruch 1, wobei die Zusammensetzung zusätzlich mindestens einen Amidharzhärter enthält.

3. Härter nach Anspruch 1, wobei die Zusammensetzung zusätzlich mindestens einen Aminharzhärter enthält.

4. Verwendung von Zusammensetzungen enthaltend mindestens einen Mercaptanhärter und mindestens ein Metallsalz von Carbonsäuren mit 8 - 24 C-Atomen als Härter für Epoxidharze, wobei als Metallsalz einer Carbonsäure Zinkricinoleat enthalten ist.

5. Verwendung nach Anspruch 4, wobei die Zusammensetzung zusätzlich mindestens einen Amidharzhärter enthält

6. Verwendung nach Anspruch 4, wobei die Zusammensetzung zusätzlich mindestens einen Aminharzhärter enthält

7. Verfahren zur Herstellung hochglänzender Epoxidharz-Beschichtungen, wobei man eine Komponente A, die mindestens ein Epoxidharz enthält, mit mindestens einem Mercaptanhärter und mindestens einem Metallsalz von Carbonsäuren mit 8 - 24 C-Atomen in Kontakt bringt, gewünschtenfalls mit weiteren Zusatzstoffen versieht, die Mischung zu einer Reaktionsharzmasse homogenisiert und diese vemetzend aushärten lässt, mit der Maßgabe, dass man als Metallsalz einer Carbonsäure Zinkricinoleat einsetzt.

8. Verfahren nach Anspruch 7, wobei man die Aushärtung bei Temperaturen im Bereich von 5 bis 50 °C durchführt.

9. Verfahren nach Anspruch 7 oder 8, wobei man die Aushärtung in Gegenwart mindestens eines Amin- und/oder Amidharzhärters durchführt.

## Claims

1. An epoxy resin hardener composition containing at least one mercaptan hardener and at least one metal salt of C₈₋₂₄ carboxylic acids with the proviso that zinc vicinoleate is present as the metal salt of carboxylic acids.

2. A composition as claimed in claim 1, **characterized in that** it additionally contains at least one amide resin hardener.

3. A composition as claimed in claim 1, **characterized in that** it additionally contains at least one amine resin hardener.

4. The use of compositions containing at least one mercaptan hardener and at least one metal salt of C₈₋₂₄ carboxylic acids as hardeners for epoxy resins, with the proviso that zinc vicinoleate is present as the metal salt of carboxylic acids.

5. The use claimed in claim 4, **characterized in that** the composition additionally contains at least one amide resin hardener.

6. The use claimed in claim 4, **characterized in that** the composition additionally contains at least one amine resin hardener.

7. A process for the production of high-gloss epoxy resin coatings, **characterized in that** a component A containing at least one epoxy resin is contacted with at least one mercaptan hardener and at least one metal salt of C₈₋₂₄ carboxylic acids and, optionally after the incorporation of other additives, the mixture is homogenized to form a catalyzed resin which is left to cure by crosslinking.

8. A process as claimed in claim 7, **characterized in that** curing is carried out a temperature of 5 to 50°C.

9. A process as claimed in claim 7 to 8, **characterized in that** curing is carried out in the presence of at least one amine and/or amide resin hardener.

## Revendications

1. Composition de durcisseur de résine époxyde contenant au moins un durcisseur de mercaptan et au moins un sel métallique d'acides carboxyliques comportant de 8 à 24 atomes de carbone, le sel métallique d'acide carboxylique étant le ricinoléate de zinc.

2. Durcisseur selon la revendication 1,
la composition contenant en outre au moins un durcisseur de résine amide.

3. Durcisseur selon la revendication 1,
la composition contenant en outre au moins un durcisseur de résine amine.

4. Utilisation de compositions contenant au moins un durcisseur de mercaptan et au moins un sel métallique d'acides carboxyliques contenant de 8 à 24 atomes de carbone comme durcisseur pour résines époxyde, le sel métallique d'un acide carboxylique étant le ricinoléate de zinc.

5. Utilisation selon la revendication 4,
selon laquelle
la composition contient en outre au moins un durcisseur de résine amide.

6. Utilisation selon la revendication 4,
selon laquelle
la composition contient en outre au moins un durcisseur de résine amine.

7. Procédé de fabrication de revêtements de résine époxyde très brillants, selon lequel on met en contact un composant A, qui contient au moins une résine époxyde, avec au moins un durcisseur de mercaptan et au moins un sel métallique d'acides carboxyliques comportant de 8 à 24 atomes de carbone, si on le souhaite on ajoute d'autres additifs, on homogénéise le mélange pour obtenir une masse réactionnelle de résine et on laisse celle-ci durcir de manière qu'elle se réticule, étant précisé qu'on utilise le ricinoléate de zinc comme sel métallique d'un acide carboxylique.

8. Procédé selon la revendication 7,
selon lequel
on effectue le durcissement à des températures allant de 5 à 50°C.

9. Procédé selon la revendication 7 ou 8,
selon lequel on effectue le durcissement en présence d'au moins un durcisseur de résine amine et/ou amide.
